# FASCICULE DE BREVET EUROPEEN

(11) **EP 2 852 311 B1**
(45) Date de publication et mention de la délivrance du brevet: **30.03.2016**
(21) Numéro de dépôt: 13739746.9
(22) Date de dépôt: 21.05.2013
(51) Int. Cl.: A47J 36/28, B65D 81/34

(54) **DISPOSITIF AUTO-CHAUFFANT**
SELBSTERWÄRMENDE VORRICHTUNG
SELF-HEATING DEVICE

(30) Priorité: 21.05.2012 FR 1254579
(43) Date de publication de la demande: 01.04.2015
(73) Titulaire: Sarl Falieres, 33840 Captieux (FR)
(72) Inventeur: FALIERES, Jean-Michel, F-33840 Captieux (FR)
(74) Mandataire: Fantin, Laurent
(86) Numéro de dépôt international: PCT/FR2013/051103
(87) Numéro de publication internationale: WO 2013/175118

(56) Documents cités:
- DE-U1- 8 703 340
- FR-A1- 2 656 596
- FR-A1- 2 659 940
- FR-A1- 2 680 502
- US-A1- 2007 221 197

## Description

La présente invention se rapporte à un dispositif auto-chauffant permettant de chauffer ou réchauffer une boisson ou un aliment.

Selon l'art antérieur, il existe des conditionnements permettant de réchauffer des aliments. Un tel conditionnement comprend deux compartiments, un premier compartiment dans lequel se produit une réaction exothermique, surmonté d'un second compartiment contenant l'aliment. Le document US-A1-2007/221197 montre un example de dispositif auto-chauffant selon le préambule de le revendication 1.

L'invention se rapporte plus particulièrement aux dispositifs auto-chauffants dont un premier réactif est stocké dans une enveloppe disposée dans un compartiment contenant l'autre réactif. A titre d'exemple, le premier réactif est un liquide, notamment de l'eau et le second réactif se présente sous la forme de granulés solides, notamment de chaux.

Il y a plus d'une dizaine d'années, le déposant a développé un dispositif auto-chauffant comprenant une barquette supérieure contenant un aliment, un réchaud sous forme d'une barquette inférieure contenant les réactifs, les barquettes supérieure et inférieure étant imbriquées l'une sur l'autre dans une barquette extérieure en cellulose moulée.

Le fond de la barquette supérieure permet de fermer le compartiment délimité par le fond et les parois périphériques de la barquette inférieure.

Selon ce mode de réalisation, le dispositif comprend un mécanisme de déclenchement de la réaction exothermique appelé percuteur apte à perforer l'enveloppe contenant l'un des réactifs. Ce percuteur se présente sous la forme d'une barrette avec une section en U dont les branches comprennent chacune une succession de dents avec un profil triangulaire dont la pointe est orientée vers le haut.

Pour que le mécanisme de déclenchement fonctionne correctement, il est nécessaire que le percuteur soit correctement positionné par rapport à l'enveloppe.

A cet effet, la barquette inférieure comprend au niveau de son fond une gorge susceptible de loger le percuteur, l'enveloppe contenant l'un des réactifs étant disposée au-dessus du percuteur et étant noyée dans le second réactif.

Lors de la fabrication, la barquette inférieure est fixée par collage dans la barquette extérieure en cellulose moulée. En suivant, un opérateur dispose le percuteur dans la barquette inférieure en le collant au niveau du fond de manière à éviter son basculement. Par la suite, il dispose la poche en la centrant dans ladite barquette et la colle pour éviter un décalage par rapport au percuteur, puis il déverse le second réactif. Après le remplissage, il fixe la barquette supérieure contenant l'aliment.

Lorsqu'un utilisateur souhaite réchauffer l'aliment, il déforme le fond de la barquette extérieure en cellulose moulée de manière à presser le percuteur contre l'enveloppe pour la perforer et déclencher la réaction exothermique. Même s'il donne satisfaction, ce dispositif peut être amélioré sur deux points. En premier lieu, l'opération de mise en place du percuteur et de l'enveloppe doit être réalisée manuellement afin qu'ils soient correctement positionnés l'un par rapport à l'autre ce qui impacte le coût de revient du dispositif.

En second lieu, aucun élément ne permet à l'utilisateur de savoir s'il doit continuer à déformer le fond du dispositif ou si la réaction exothermique est déclenchée.

Aussi, la présente invention vise à remédier aux inconvénients de l'art antérieur. A cet effet, l'invention a pour objet un dispositif auto-chauffant permettant de chauffer ou réchauffer un produit stocké dans une barquette, ledit dispositif comprenant un compartiment contenant deux réactifs aptes à produire une réaction exothermique, l'un des réactifs étant stocké dans une enveloppe souple susceptible d'être perforée par un percuteur qui est disposé dans le compartiment et qui comprend au moins un élément perforant, le percuteur comprenant un corps et au moins deux berceaux en U caractérisé en ce que les au moins deux berceaux en U maintiennent l'enveloppe souple au-dessus du ou des élément(s) perforant(s) du percuteur. D'autres caractéristiques et avantages ressortiront de la description qui va suivre de l'invention, description donnée à titre d'exemple uniquement, en regard des dessins annexés sur lesquels :
- La figure 1 est une coupe d'un dispositif auto-chauffant selon l'invention,
- La figure 2 est une vue en éclaté des différents éléments formant un dispositif auto-chauffant selon l'invention,
- La figure 3 est une vue en perspective d'un percuteur selon une variante de l'invention,
- La figure 4 est une vue en perspective du percuteur de la figure 3 supportant une enveloppe à l'extérieur du dispositif,
- La figure 5 est une vue de dessus du percuteur de la figure 3 disposé dans le dispositif avant la mise en place d'une enveloppe,
- La figure 6 est une vue latérale d'un percuteur selon une autre variante de l'invention, et
- La figure 7 est une coupe d'un dispositif auto-chauffant selon une autre variante de l'invention.

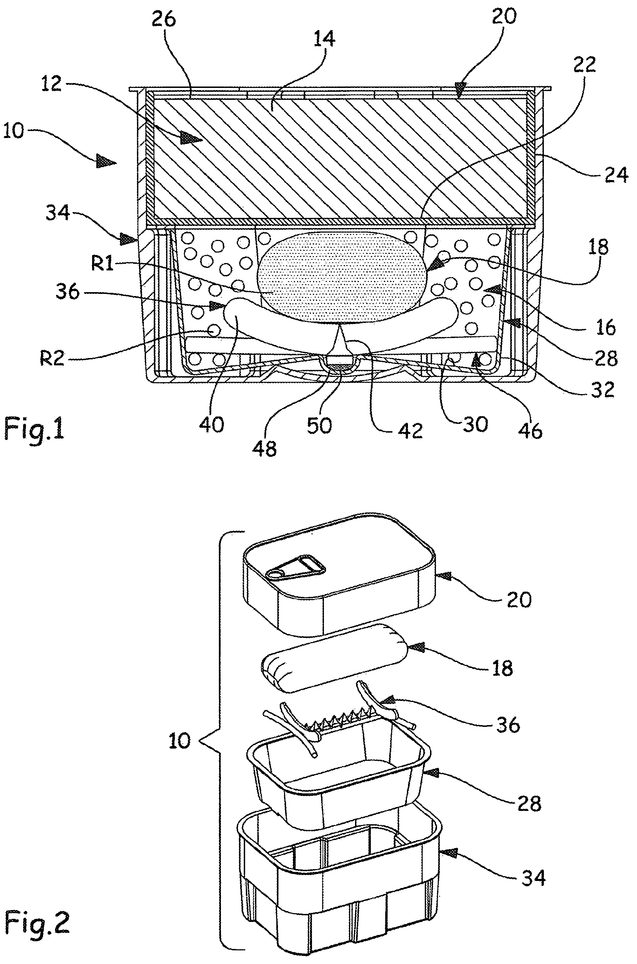

Sur la figure 1, on a représenté un dispositif auto-chauffant 10 qui comprend un premier compartiment 12 dans lequel est stocké un produit 14 à chauffer ou à réchauffer et un deuxième compartiment 16 contenant deux réactifs R1 et R2 aptes à produire une réaction exothermique, les deux compartiments étant juxtaposés de manière à ce que la chaleur produite dans l'un puisse se propager vers l'autre.

Selon l'invention, l'un des réactifs R1 est fluide ou pâteux et conditionné dans une enveloppe 18 susceptible d'être perforée comme par exemple une poche en matière plastique.

Par enveloppe, on entend un contenant souple qui peut se déformer. Ainsi, une enveloppe n'a pas une forme propre.

Un tel dispositif est plus particulièrement adapté pour chauffer ou réchauffer un aliment ou une boisson.

Selon un mode de réalisation, le premier compartiment 12 est délimité par une barquette supérieure 20 métallique ou en matière plastique. Cette barquette comprend un fond 22, au moins une paroi périphérique 24 et une paroi supérieure 26 intégrant un système d'ouverture.

Généralement, le fond 22 et la paroi supérieure 26 sont parallèles. La ou les parois périphériques peuvent avoir différentes formes.

La barquette supérieure 20 n'est pas plus décrite car elle est connue de l'homme du métier en tant que conditionnement de produits alimentaires ou de boissons. Selon un mode de réalisation, le deuxième compartiment 16 est délimité par une barquette 28 appelée également réchaud métallique, notamment en alliage d'aluminium, qui comprend un fond 30 et au moins une paroi latérale 32.

Le réchaud 28 est disposé sous la barquette supérieure 20 et le fond 22 de la barquette supérieure 20 permet de fermer le compartiment 16. Avantageusement, le bord périphérique supérieur de !a ou des parois latérales du réchaud 28 a le même profil que la périphérie du fond de la barquette supérieure 20.

De préférence, le dispositif auto-chauffant comprend une barquette extérieure 34 dans laquelle s'imbriquent le réchaud 28 et la barquette supérieure 20 l'une sur l'autre. Cette barquette extérieure 34 assure le maintien du réchaud 28 et de la barquette supérieure 20 l'un sur l'autre et l'isolation du compartiment 16 dans lequel se produit la réaction exothermique.

Selon un mode de réalisation, la barquette extérieure 34 est en cellulose moulée. Le réchaud 28, la barquette extérieure 34, leur mode d'assemblage, les réactifs R1 et R2 ne sont pas plus décrits car ils peuvent être identiques à ceux de l'art antérieur.

Le deuxième compartiment 16 comprend les deux réactifs R1 et R2, R1 étant contenu dans une enveloppe 18, ainsi qu'un percuteur 36 apte à perforer l'enveloppe 18 afin de déclencher la réaction exothermique.

L'enveloppe 18 a généralement une forme allongée, sensiblement rectangulaire en vue de dessus.

Ce percuteur 36 comprend un corps allongé 38 et au moins deux supports en U appelés par la suite berceaux 40, 40' sur lesquels repose l'enveloppe 18. Les berceaux 40, 40' permettent de maintenir l'enveloppe 18 souple et de la positionner par rapport au percuteur 36.

Selon un mode de réalisation, les deux berceaux 40, 40' ont la même forme en arc de cercle.

Pour la suite de la description, on entend par direction longitudinale, la direction qui correspond à la plus grande dimension du corps allongé.

Les deux berceaux 40, 40' sont disposés dans des plans perpendiculaires à la direction longitudinale et sont sensiblement centrés par rapport au corps allongé 38.

Avantageusement, le percuteur 36 comprend deux berceaux 40, 40' disposés aux extrémités du corps allongé 38. Les longueurs du corps et des berceaux sont ajustées en fonction des dimensions de l'enveloppe 18. De préférence, la longueur des berceaux est égale ou légèrement supérieure à la largeur de l'enveloppe. En parallèle, l'écartement entre les berceaux (qui correspond à la longueur du corps allongé 38) correspond à approximativement les trois quarts de la longueur de l'enveloppe 18.

Contrairement à l'art antérieur, l'enveloppe 18 est positionnée directement par le percuteur qui comprend des moyens pour la positionner sous forme d'au moins deux berceaux. Ainsi, l'enveloppe 18 est toujours correctement positionnée par rapport au percuteur 36.

De manière connue, le percuteur 36 comprend au moins un élément perforant 42 pointu apte à perforer l'enveloppe 18. Avantageusement, le percuteur 36 comprend plusieurs éléments perforants 42 répartis sur la longueur du corps 38. Selon le mode de réalisation illustré sur les figures, les éléments perforants 42 sont disposés selon une rangée. En variante, ils pourraient être disposés selon plusieurs rangées, notamment deux comme pour l'art antérieur. Le profil des éléments perforants 42 n'est pas plus détaillé car il peut être identique à celui des éléments perforants de l'art antérieur.

Les éléments perforants 42 comprennent une extrémité pointue orientée en direction de l'enveloppe 18 lorsque cette dernière repose sur les berceaux 40, 40'. Avant perforation, les berceaux 40 40' maintiennent l'enveloppe 18 souple au-dessus du ou des éléments perforants 42 du percuteur, à proximité de ces derniers afin qu'une action sur le percuteur provoque la perforation de l'enveloppe 18.

Selon une autre caractéristique de l'invention, le percuteur 36 comprend des moyens pour le stabiliser. De préférence, le percuteur 36 comprend des bras de stabilisation 44 disposés de part et d'autre du corps allongé 38 et qui sont aptes à prendre appui contre le fond 30 du réchaud 28.

Ces moyens de stabilisation permettent lors de la mise en place du percuteur d'orienter les éléments perforants vers le haut et de limiter le basculement autour d'un axe de pivotement parallèle à la direction longitudinale lors de la mise en place de l'enveloppe 18.

Pour assurer une plus grande stabilité, les bras de stabilisation 44 sont les plus espacés et répartis de manière symétrique de part et d'autre du corps allongé 38.

Avantageusement, les bras de stabilisation 44 sont reliés aux extrémités du corps 38.

Selon un mode de réalisation, les bras de stabilisation 44 se présentent sous la forme d'une tige 46 avec une section circulaire disposée à cheval de part et d'autre du corps allongé 36, chaque portion de la tige 46 disposée d'un côté du corps formant un bras de stabilisation 44. De préférence, le percuteur 36 comprend une tige 46 à chaque extrémité du corps allongé 38. Chaque tige 46 est incurvée (en vue de dessus) de manière à ce que les extrémités des bras soient les plus écartées possible.

Selon une autre caractéristique de l'invention, le percuteur comprend des moyens pour le centrer dans le réchaud.

Selon une première solution, la longueur des bras de stabilisation 44 est sensiblement égale à la largeur du réchaud. Ainsi, lors de la mise en place du percuteur, les extrémités des bras de stabilisation 44 sont disposées au niveau de la zone de jonction entre le fond 30 et les parois latérales 32 du réchaud 28. En complément ou en variante, le fond 30 du réchaud 28 comprend une gorge 48 apte à loger le corps allongé 38 du percuteur 36 et les bras de stabilisation 44 sont décalés en hauteur par rapport à la face inférieure 50 du corps allongé 38 susceptible d'être en contact avec le fond de la gorge 48. Ce décalage en hauteur est fonction de la profondeur de la gorge 48 de manière à ce que la face inférieure 50 soit en contact avec le fond de la gorge 48 et que les bras de stabilisation 44 soient en contact avec le reste du fond 30 du réchaud autour de la gorge 48. Toutefois, le percuteur 36 pourra être utilisé dans des barquettes à fond plat (plus répandues et moins coûteuses) en ajustant la forme des bras de stabilisation 44.

Le percuteur 36 selon l'invention permet de pouvoir automatiser sa mise en place dans le réchaud 28 ainsi que celle des réactifs et de supprimer les deux opérations de collage qui étaient nécessaires selon l'art antérieur.

Selon un mode de réalisation, le corps allongé 38, les berceaux 40, 40', les bras de stabilisation 44, les éléments perforants 42 sont réalisés d'un seul tenant en matière plastique, par injection par exemple.

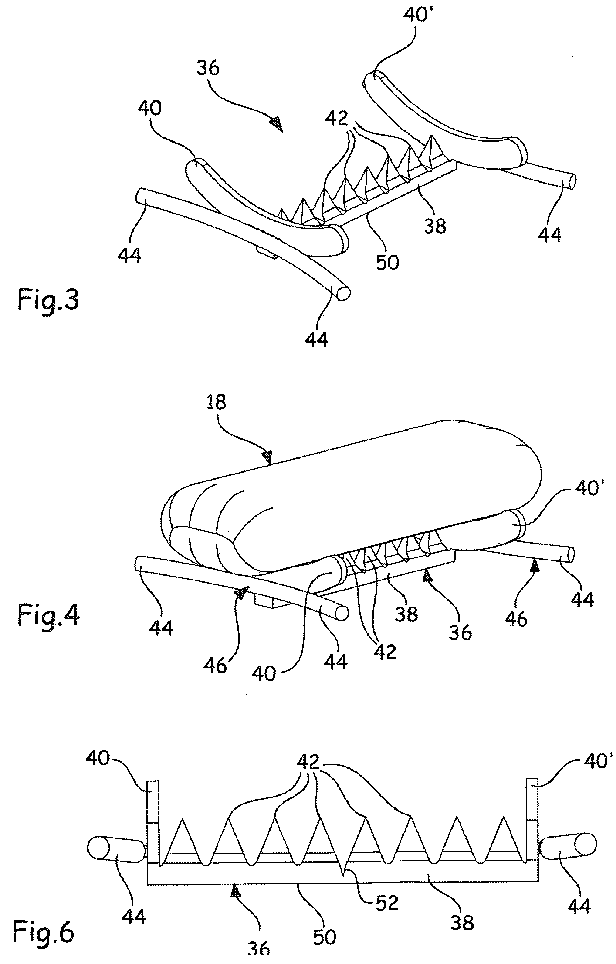

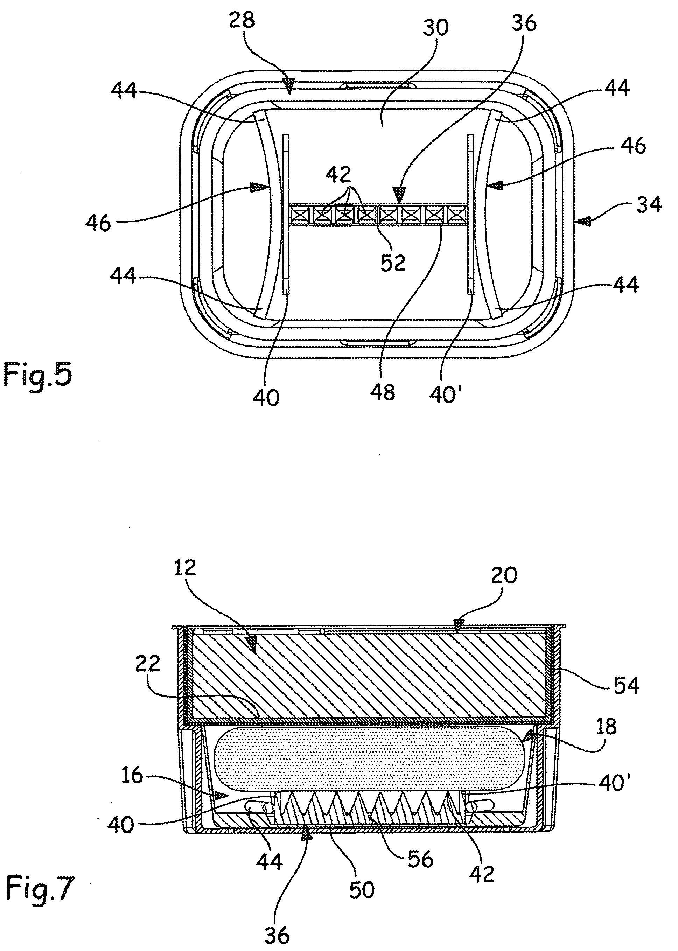

Selon une autre caractéristique de l'invention, le percuteur 36 comprend une amorce de rupture 52, comme illustré sur les figures 5 à 7. Selon un mode de réalisation, cette amorce de rupture 52 est disposée au niveau du corps allongé 38, approximativement à équidistance de ses extrémités. Cette amorce de rupture 52 est réalisée au niveau de la face supérieure (opposée à la face inférieure 50) entre deux éléments perforants 42. Selon un mode de réalisation, l'amorce de rupture 52 comprend une entaille 56 de manière à ce que le corps 38 aie une hauteur réduite entre deux éléments perforants 42.

Avantageusement, la matière utilisée pour le percuteur doit produire un craquement lors de la rupture du corps allongée 38 de manière à indiquer à l'utilisateur que la réaction est déclenchée. Selon un mode de réalisation, le percuteur est réalisé à base de styrène acrylonitrile.

Selon une autre caractéristique de l'invention, le dispositif auto-chauffant comprend un moyen pour favoriser la diffusion de la chaleur sur une plus grande surface des parois de la barquette supérieure 20. Ce moyen permet de limiter la concentration de la chaleur au niveau du fond 22 de la barquette supérieure 20. Ainsi, la barquette supérieure 20 peut être en matière plastique et ne risque pas d'être endommagée par l'élévation de température provoquée par la réaction exothermique.

Selon un mode réalisation illustré sur la figure 7, une feuille 54 en alliage d'aluminium (ou en une autre matière comme par exemple en un alliage métallique commercialisé sous le nom commercial « liquidmetal ») est intercalée entre le compartiment 16 et le fond 22 de la barquette supérieure 20. Cette feuille 54 s'étend au niveau du fond 22 et de la paroi périphérique 24 de la barquette supérieure 20. Ainsi, cette feuille 54 permet de limiter la concentration de la chaleur au niveau du fond 22 de la barquette et de la sorte l'élévation de chaleur au niveau du fond 22 et la diffuse au niveau de la paroi périphérique 24. Cette solution permet d'utiliser des barquettes en matière plastique et assure une répartition de la chaleur plus homogène. Selon un autre avantage, la feuille 54 peut permettre de fermer le compartiment 16 contenant les réactifs de manière étanche. Dans ce cas, le dispositif pourrait être vendu sans la barquette 20 contenant le produit à chauffer ou réchauffer. Le dispositif de l'invention fonctionne aussi bien avec des barquettes en matière plastique qu'avec des barquettes métalliques qui tendent à disparaitre au profit des premières.

## Revendications

1. Dispositif auto-chauffant permettant de chauffer ou réchauffer un produit (14) stocké dans une barquette (20), ledit dispositif comprenant un compartiment (16) contenant deux réactifs aptes à produire une réaction exothermique, l'un des réactifs étant stocké dans une enveloppe (18) souple susceptible d'être perforée par un percuteur (36) qui est disposé dans le compartiment (16) et qui comprend au moins un élément perforant (42), le percuteur (36) comprenant un corps (38) et au moins deux berceaux (40, 40') en U **caractérisé en ce que** les au moins deux berceaux en U maintiennent l'enveloppe (18) souple au-dessus du ou des élément(s) perforant(s) (42) du percuteur (36).

2. Dispositif auto-chauffant selon la revendication 1, **caractérisé en ce que** les berceaux (40, 40') sont disposés dans des plans parallèles et ont une forme en arc de cercle.

3. Dispositif auto-chauffant selon la revendication 1 ou 2, **caractérisé en ce que** le corps (38) a une forme allongée et **en ce que** les berceaux sont disposés de manière centrée à chaque extrémité du corps allongé (38) dans des plans perpendiculaires audit corps allongé (38).

4. Dispositif auto-chauffant selon la revendication 3, **caractérisé en ce que** l'écartement entre les deux berceaux (40, 40') est égal aux trois quarts de la longueur de l'enveloppe (18).

5. Dispositif auto-chauffant selon l'une quelconque des revendications précédentes, **caractérisé en ce que** le percuteur (36) comprend des bras de stabilisation (44) disposés de part et d'autre du corps (38) et qui sont aptes à prendre appui contre le fond (30) du deuxième compartiment (16).

6. Dispositif auto-chauffant selon la revendication 5, **caractérisé en ce que** le percuteur (36) comprend des tiges (46), chaque tige (46) étant disposée à cheval de part et d'autre du corps (36), chaque portion de la tige (46) disposée d'un côté du corps formant un bras de stabilisation (44).

7. Dispositif auto-chauffant selon la revendication 6, **caractérisé en ce que** le percuteur (36) comprend une tige (46) à chaque extrémité du corps (38), chaque tige (46) étant incurvée de manière à ce que les extrémités des bras (44) soient les plus écartées.

8. Dispositif auto-chauffant selon l'une quelconque des revendications précédentes, **caractérisé en ce que** le percuteur (36) comprend une amorce de rupture (52).

9. Dispositif auto-chauffant selon la revendication 8, **caractérisé en ce que** le percuteur (36) est réalisé en une matière qui produit un craquement lors de sa rupture.

10. Dispositif auto-chauffant selon l'une quelconque des revendications précédentes, **caractérisé en ce qu'**il comprend une feuille (54) fermant le compartiment (16) et susceptible d'être intercalée entre le compartiment (16) et le fond (22) de la barquette (20), cette feuille (54) s'étendant au niveau du fond (22) et de la paroi périphérique 24 de la barquette (20).

11. Dispositif auto-chauffant selon l'une quelconque des revendications précédentes, **caractérisé en ce qu'**il comprend une barquette (20) dans laquelle est stocké le produit (14) à chauffer ou à réchauffer et une barquette extérieure (34) dans laquelle s'imbriquent le compartiment (16) et ladite barquette (20) l'un sur l'autre.

## Patentansprüche

1. Selbsterwärmende Vorrichtung, die es gestattet, ein in einem Behälter (20) gelagertes Produkt (14) aufzuwärmen oder wieder aufzuwärmen, wobei die Vorrichtung einen Bereich (16) aufweist, der zwei Reaktionsmittel enthält, die dazu geeignet sind, eine exotherme Reaktion zu erzeugen, wobei eines der Reaktionsmittel in einer weichen Hülle (18) gelagert ist, die dazu eingerichtet ist, von einer Schlagvorrichtung (36) durchlöchert zu werden, die in dem Bereich (16) angeordnet ist und die wenigstens ein durchlöcherndes Element (42) aufweist, wobei die Schlagvorrichtung (36) einen Körper (38) und wenigstens zwei U-förmige Bögen (40, 40') aufweist, **dadurch gekennzeichnet, dass** die wenigstens zwei U-förmigen Bögen die weiche Hülle (18) oberhalb des oder der durchlöchernden Elements/e (42) der Schlagvorrichtung (36) halten.

2. Selbsterwärmende Vorrichtung nach Anspruch 1, **dadurch gekennzeichnet, dass** die Bögen (40, 40') in parallelen Ebenen angeordnet sind und kreisbogenförmig ausgebildet sind.

3. Selbsterwärmende Vorrichtung nach Anspruch 1 oder 2, **dadurch gekennzeichnet, dass** der Körper (38) eine längliche Form aufweist und dass die Bögen auf zentrierte Weise an jedem Ende des länglichen Körpers (38) in Ebenen angeordnet sind, die im rechten Winkel zum länglichen Körper (38) ausgerichtet sind.

4. Selbsterwärmende Vorrichtung nach Anspruch 3, **dadurch gekennzeichnet, dass** der Abstand zwischen den beiden Bögen (40, 40') gleich drei Viertel der Länge der Hülle (18) ist.

5. Selbsterwärmende Vorrichtung nach einem der vorhergehenden Ansprüche, **dadurch gekennzeichnet, dass** die Schlagvorrichtung (36) Stabilisierungsarme (44) umfasst, die beidseits des Körpers (38) angeordnet sind und dazu geeignet sind, sich auf dem Boden (30) des zweiten Bereichs (16) abzustützen.

6. Selbsterwärmende Vorrichtung nach Anspruch 5, **dadurch gekennzeichnet, dass** die Schlagvorrichtung (36) Stangen (46) aufweist, wobei jede Stange (46) sattelförmig beidseits des Körpers (36) angeordnet ist und wobei jeder Abschnitt der Stange (46), der auf einer Seite des Körpers angeordnet ist, einen Stabilisierungsarm (44) bildet.

7. Selbsterwärmende Vorrichtung nach Anspruch 6, **dadurch gekennzeichnet, dass** die Schlagvorrichtung (36) an jedem Ende des Körpers (38) eine Stange (46) aufweist, wobei jede Stange (46) derart gekrümmt ist, dass die Enden der Arme (44) voneinander am weitesten entfernt sind.

8. Selbsterwärmende Vorrichtung nach einem der vorhergehenden Ansprüche, **dadurch gekennzeichnet, dass** die Schlagvorrichtung (36) eine Sollbruchstelle (52) aufweist.

9. Selbsterwärmende Vorrichtung nach Anspruch 8, **dadurch gekennzeichnet, dass** die Schlagvorrichtung (36) aus einem Material hergestellt ist, dessen Bruch ein Knacken erzeugt.

10. Selbsterwärmende Vorrichtung nach einem der vorhergehenden Ansprüche, **dadurch gekennzeichnet, dass** diese eine Folie (54) aufweist, die den Bereich (16) verschließt und dazu eingerichtet ist, zwischen dem Bereich (16) und dem Boden (22) des Behälters (20) angeordnet zu sein, wobei sich diese Folie (54) im Bereich des Bodens (22) und der umfänglichen Wand (24) des Behälters (20) erstreckt.

11. Selbsterwärmende Vorrichtung nach einem der vorhergehenden Ansprüche, **dadurch gekennzeichnet, dass** diese einen Behälter (20) aufweist, in dem das aufzuwärmende oder wieder aufzuwärmende Produkt gelagert ist, und einen äußeren Behälter (34) in dem der Bereich (16) und der Behälter (20) übereinander angeordnet sind.

## Claims

1. A self-heating device for heating or reheating a product (14) stored in a tray (20), said device comprising a compartment (16) containing two reagents able to produce an exothermic reaction, one of the reagents being stored in a flexible enclosure (18) able to be perforated by a striker (36) that is disposed in the compartment (16) and comprises at least one perforating element (42), the striker (36) comprising a body (38) and at least two U-shaped cradles (40, 40'), **characterised in that** the at least two U-shaped cradles hold the flexible enclosure (18) above the perforating element or elements (42) of the striker (36).

2. A self-heating device according to claim 1, **characterised in that** the cradles (40, 40') are disposed in parallel planes and are in the form of an arc of a circle.

3. A self-heating device according to claim 1 or 2, **characterised in that** the body (38) has an elongate shape and **in that** the cradles are disposed so as to be centred at each end of the elongate body (38) in planes perpendicular to said elongate body (38).

4. A self-heating device according to claim 3, **characterised in that** the separation between the two cradles (40, 40') is equal to three quarters of the length of the enclosure (18).

5. A self-heating device according to any one of the preceding claims, **characterised in that** the striker (36) comprises stabilisation arms (44) disposed on either side of the body (38) and able to bear against the bottom (30) of the second compartment (16).

6. A self-heating device according to claim 5, **characterised in that** the striker (36) comprises rods (46), each rod (46) being disposed straddling on either side of the body (36), each portion of the rod (46) disposed on one side of the body forming a stabilisation arm (44).

7. A self-heating device according to claim 6, **characterised in that** the striker (36) comprises a rod (46) at each end of the body (38), each rod (46) being curved so that the ends of the arms (44) are the most separated.

8. A self-heating device according to any one of the preceding claims, **characterised in that** the striker (36) comprises a rupture initiator (52).

9. A self-heating device according to claim 8, **characterised in that** the striker (36) is produced from a material that produces a crackle when it ruptures.

10. A self-heating device according to any one of the preceding claims, **characterised in that** it comprises a sheet (54) closing the compartment (16) and able to be interposed between the compartment (16) and the bottom (22) of the tray (20), this sheet (54) extending at the bottom (22) and at the peripheral wall (24) of the tray (20).

11. A self-heating device according to any one of the preceding claims, **characterised in that** it comprises a tray (20) in which the product (14) to be heated or reheated is stored and an external tray (34) in which the compartment (16) and said tray (20) fit one on the other.
